# EUROPÄISCHE PATENTANMELDUNG

(11) **EP 2 400 620 A2**
(43) Veröffentlichungstag der Anmeldung: **28.12.2011**
(21) Anmeldenummer: 11160094.6
(22) Anmeldetag: 28.03.2011
(51) Int. Cl.: H02J 3/38, H02J 7/32

(54) **Speichersystem für erneuerbare Energien**

(30) Priorität: 30.03.2010 DE 102010016233
(71) Anmelder: motiondrive AG, 92660 Neustadt a.d. Waldnaab (DE)
(72) Erfinder: Krachtus, Werner, 92699 Bechtsrieth (DE)
(74) Vertreter: Lermer, Christoph

(57) **Zusammenfassung**

Ein Speichersystem 1 weist mehrere Windräder 2 auf. Die damit erzeugte Energie wird in ein Stromnetz 3 eingespeist. Bei hoher Stromerzeugung wird erfindungsgemäß eine alternative Energieeinspeisung 4 zugeschaltet, die über ein Ladegerät 5 Energiespeichereinheiten 7 auflädt. Eine Steuerung 8 sorgt dafür, dass eine optimale Nutzung der von den Stromerzeugungseinheiten 2 erzeugten Leistung erreicht wird, indem bei einer Überlastung des Stromnetzes 3 die Energiespeichereinheiten 7 mit der überschüssigen erzeugten Energie aufgeladen werden.

## Beschreibung

### TECHNISCHES GEBIET

Die vorliegende Erfindung betrifft ein Speichersystem zur Energiespeicherung umfassend wenigstens eine Stromerzeugungseinheit; und einen Versorgungsanschluss zur Versorgung eines Stromnetzes. Außerdem betrifft Anmeldung ein Verfahren zur Speicherung von in einem Stromerzeugungssystem erzeugter elektrischer Energie, umfassend die Bereitstellung wenigstens einer Stromerzeugungseinheit.

### STAND DER TECHNIK

Aufgrund steigender Preise und knapper werdender Ressourcen an fossilen Brennstoffen sowie Umweltbelastungen (Treibhauseffekt) wird der Einsatz regenerierbarer Strom immer nachdrücklicher gefordert. Als regenerierbare Stromerzeuger sind Solarzellen und Windkraftwerke bereits technisch einsetzbar.

Zudem wird gefordert, Automobile verstärkt mit alternativen Energien anzutreiben. Problematisch ist dabei insbesondere eine wirtschaftliche Energiespeicherung im Fahrzeug. Hohe Reichweiten werden nur mit großem technischem Aufwand erzielt. Andererseits dauert ein "Auftanken" eines Elektrofahrzeugs zu lange, um dies während einer Fahrtunterbrechung durchzuführen.

Nachteilhaft an den genannten Arten alternativer Stromerzeugung ist jedoch die Abhängigkeit von Faktoren wie Stärke der Sonneneinstrahlung oder der Windkraft. So kann es bei ungünstiger Wetterlage vorkommen, dass beispielsweise von einem Windkraftwerk zu Zeiten hohen Bedarfs im Netz nicht genügend Leistung eingespeist werden kann. Umgekehrt kann es in Zeiten hoher Stromerzeugung durch das Windkraftwerk zu einer Überlastung des Stromnetzes kommen, so dass wenigstens Teile des Windkraftwerks vom Netz abgekoppelt werden müssen.

Bei einer Abkopplung geht somit die vom Windkraftwerk zu bestimmten Zeiten erzeugte Überkapazität an Energie verloren, sofern sie nicht zwischengespeichert und anschließend wieder in das Netz eingespeist wird. Eine derartige Zwischenspeicherung ist jedoch aufwendig. Insbesondere müssen hohe Speicherkapazitäten bereitgestellt werden, die es erlauben, einen ausreichenden Puffer aufzubauen, der eine tatsächliche Unterversorgung des Netzes mit elektrischer Leistung ausgleichen kann.

### AUFGABE DER ERFINDUNG

Ausgehend davon besteht die Aufgabe der vorliegenden Erfindung darin, ein Speichersystem und ein Verfahren zur Speicherung von erzeugter elektrischer Energie in einem Speichersystem bereitzustellen, die es erlauben, kostenlos und ohne zusätzliche CO₂-Belastung Energie zu gewinnen.

### TECHNISCHE LÖSUNG

Diese Aufgabe wird gelöst durch ein Speichersystem gemäß dem Anspruch 1 und ein Verfahren gemäß dem Anspruch 10. Vorteilhafte Ausführungsformen der Erfindung ergeben sich aus den Merkmalen der abhängigen Ansprüche.

Ein erfindungsgemäßes Speichersystem umfasst: wenigstens eine Stromerzeugungseinheit; einen Versorgungsanschluss zur Versorgung eines Stromnetzes; und eine Energieeinspeisung zur Einspeisung elektrischer Energie (bzw. Leistung) in wenigstens ein an die Energieeinspeisung angekoppeltes Lademodul.

Die Energieeinspeisung ist über eine Weiche mit der Stromerzeugungseinheit verbunden bzw. verbindbar. Über die Weiche kann die Energieeinspeisung bedarfsweise angeschlossen oder abgekoppelt werden. Bei Überlasten der Stromerzeugungseinheit kann die Energieeinspeisung zugeschaltet oder auch vom Stromnetz auf die Energieeinspeisung "umgeschaltet" werden, d. h. das ausgelastete Stromnetz wird zugunsten der Energieeinspeisung abgekoppelt. So ist es möglich, erzeugte Energie, die in üblichen Systemen verloren geht, zu nutzen. Dadurch werden Kosten und die CO₂-Belastung gesenkt.

In einer alternativen Ausführungsform weist das Speichersystem auf: wenigstens eine Stromerzeugungseinheit; und eine Energieeinspeisung zur Einspeisung elektrischer Energie in wenigstens ein an die Energieeinspeisung angekoppeltes Lademodul. Die Ausführungsform ist geeignet für Energieerzeugungssysteme, die nicht an ein (öffentliches) Stromnetz angebunden sind. Mit Hilfe des Lademoduls und der mobilen Akkus können beispielsweise eine Solaranlage oder ein Windkraftwerk betrieben werden, die nicht an Leitung eines Energieversorgers angeschlossen sind. Dieses erfindungsgemäße System ist autark, d. h. es ist stets genügend Energie durch regenerative Quellen 3 verfügbar.

Die Stromerzeugungseinheiten können beispielsweise, im Fall eines Windkraftwerks, Windräder sein. Im Fall einer Solarenergieerzeugungsanlage können die Stromerzeugungseinheiten Solarmodule sein. Bei diesen alternativen, ökologischen (weil erneuerbaren) Energien eignet sich das vorliegende System besonders gut, da hier, beispielsweise durch witterungsbedingte Umstände, starke Schwankungen in der Stromerzeugung auftreten können. Zudem kann es sein, dass in der Stromerzeugung relativ unerwartet und zeitlich schwer abschätzbar starke Spitzen, beispielsweise bei starkem Wind, vorkommen, wobei die anderen Versorger des Netzes nicht rechtzeitig und in ausreichendem Umfang abgeschaltet werden können, um die überschüssige Energie in das Stromnetz einzuspeisen.

Bei hoher Energieerzeugung wird daher erfindungsgemäß eine alternative Energieeinspeisung zugeschaltet bzw. auf diese über eine Weiche umgeschaltet. Die Energieeinspeisung lädt über ein Ladegerät Energiespeichereinheiten auf. Die überschüssige Energie wird so an die "mobilen" Energiespeichereinheiten abgegeben. Eine Steuerung kann dafür sorgen, dass eine optimale Nutzung der von den Stromerzeugungseinheiten erzeugten Leistung erreicht wird, indem bei einer Überlastung des Stromnetzes die Energiespeichereinheiten mit der überschüssigen erzeugten Energie aufgeladen werden. So erfolgt eine nahezu kostenlose Aufladung mobiler Energiespeicher, wie sie beispielsweise für Elektrofahrzeuge eingesetzt werden.

Da die Energiespeicher von Elektrofahrzeugen aus zeitlichen Gründen nicht an der "Tankstelle" aufgeladen werden können, bietet sich ein Austauschen leerer Akkus gegen geladene Akkus an einer Wechselstation an. Unter dieser Prämisse steigt jedoch der Bedarf an mobilen, geladenen Akkumulatoren. Diese müssen im Rahmen der Erfindung nicht am regulären Netz aufgeladen werden, sonder können flexibel die bei Überkapazitäten eines alternativen Stromerzeugungssystem erzeugte Leistung nutzen, die ansonsten verloren gehen würde. Dabei können auch austauschbare Akkus im Wechsel eingesetzt bzw. geladen werden. So ist es denkbar, beispielsweise drei Akkus in einem privaten Haushalt für ein Elektroauto in zwei Ladestationen wechselweise zu laden bzw. einzusetzen.

Die mobilen Energiespeichereinheiten können nach dem Aufladen abtransportiert und an einen geeigneten Einsatzort gebracht werden, beispielsweise zu einer Akkuwechselstation zum Wechseln der Akkus von Elektrofahrzeugen.

Vorzugsweise ist das wenigstens eine Lademodul als mobiles, an die Energieeinspeisung an- und abkoppelbares Modul ausgebildet. Das Lademodul ist als Ladeschrank vorstellbar, in dem verschiedene Anschluss- und Aufnahmeplätze zum Aufladen der Energiespeichereinheiten vorgesehen sind. Diese flexibel einsetzbaren Lade- bzw. Modulschränke können je nach Bedarf in unterschiedlicher Zahl an das Speichersystem bzw. aneinander gekoppelt werden. Damit kann die Kapazität der zu beladenden Energiespeichereinheiten variiert werden. Bei Windkraftwerken ist es beispielsweise somit möglich, in Abhängigkeit von der Wettervorhersage an einer Energieerzeugungsanlage weitere Schränke bereitzustellen oder die Zahl zu reduzieren.

Die Energieeinspeisung weist insbesondere mehrere Anschlüsse zum An- und Abkoppeln von Lademodulen auf. In diesem Fall kann die Anzahl der angeschlossenen Lademodule und somit der maximal aufladbaren Energiespeichereinheiten variiert werden. Die Ladegeräte können vorzugsweise als mobile Ladegeräte ausgebildet sein. Die Energieeinspeisung ist insbesondere über wenigstens eine Weiche an die Stromerzeugungseinheit anschließbar.

Insbesondere ist das Lademodul zur Aufnahme bzw. zum Ankoppeln einer oder mehrere mobiler Energiespeichereinheiten ausgebildet. Die Energiespeichereinheiten können genormt bzw. standardisiert sein. Sie können mit bestimmter Aufnahmekapazität oder Geometrie ausgestattet sein. Die Energiespeichereinheiten können beispielsweise als Akkumodule oder als Brennstoffzellen ausgebildet sein. Sie können speziell genormt für den Einsatz in Elektrofahrzeugen ausgebildet sein. Das Lademodul weist vorzugsweise einen oder mehrere Anschlussplätze zum Aufladen eines oder mehrerer mobiler Energiespeichereinheiten auf. Das Speichersystem weist insbesondere wenigstens eine mobile Energiespeichereinheit zum Aufladen bei einer Aus- bzw. Überlastung des Stromnetzes auf.

Das Speichersystem kann eine Steuerung oder Regelung aufweisen, die derart ausgebildet ist, dass abhängig von wenigstens einem Parameter des Stromnetzes wenigstens eine Stromerzeugungseinheit vom Stromnetz abgekoppelt und an die Stromeinspeisung angekoppelt wird. Die Steuerung kann so konzipiert sein, dass nur bei einer Überkapazität der Stromproduktion der Stromerzeugungseinheiten die Energieeinspeisung angekoppelt wird, d.h. die daran angeschlossenen Energiespeichereinheiten geladen werden.

Eine Steuerung kann eine Überkapazität der Stromerzeugung erkennen und das Aufladen bestimmter mobiler Energiespeichereinheiten bei Auftreten der Überkapazität der Stromerzeugung steuern. Die Steuerung ermittelt als eine Überlastung des Stromnetzes bzw. eine Überkapazität in der Stromproduktion und a) trennt die Stromerzeugung vom Netz, b) verbindet die Einspeisung mit der Stromerzeugung, c) verbindet ein Lademodul, einzelne bestimmte Lademodule, mehrere oder alle Lademodule mit der Stromversorgung, und/oder d) verbindet einzelne Energiespeichereinheiten mit der Stromversorgung, jeweils in Abhängigkeit vom Ausmaß der in das Stromnetz noch einspeisbaren Leistung (ohne dass eine Überlastung entsteht) und/oder in Abhängigkeit vom Ausmaß der Überkapazität (Überproduktion) der Stromversorgung und/oder in Abhängigkeit von zur Verfügung stehenden Speicherkapazitäten in den Lademodulen bzw. in den Energiespeichereinheiten.

Die Steuerung kann wenigstens einen Load Balancer zur Verteilung der durch die Stromerzeugungseinheit erzeugten Leistung auf die einzelnen Energiespeichereinheiten und/oder das Stromnetz umfassen. Unter einem Load balancer kann ein "intelligenter" Verteiler verstanden werden, der, je nach dem erfassten Systemzustand, die Aufladung der Energiespeichereinheiten optimiert. So kann, bei durchschnittlicher Energieerzeugung und Netzauslastung die Energieeinspeisung völlig abgekoppelt sein, d. h. die Weiche ist von der Stromerzeugungseinheit zum Stromnetz geschaltet. Bei hoher Einspeisung ins Netz kann die Weiche so geschaltet werden, dass die Energieeinspeisung zugeschaltet oder auf diese umgeschaltet wird, sodass die Energiespeichereinheiten geladen werden. Auch kann die Leistung, die in ein bestimmtes Lademodul bzw. in eine bestimmte Energiespeichereinheit eingespeist wird, von der Steuerung bestimmt werden. Welche Energiespeichereinheiten geladen werden und mit welcher Leistung wird wiederum vom Load balancer bestimmt bzw. angegeben. Zudem kann die Steuerung die Aufladungszustände der Energiespeichereinheiten sowie den Zustand des Gesamtsystems überwachen. Es kann anzeigen, wann und welche Energiespeichereinheit auszutauschen ist. Dies führt zu einer optimierten Aufladung und reduziert den Personaleinsatz.

Alternativ zu einer aktiven Steuerung kann die Stromerzeugungseinheiten so angeschlossen bzw. so gekoppelt sein, dass durch die gesamte Schaltung gewährleistet wird, dass die Energiespeichereinheiten nur dann geladen werden, wenn eine gewisse Schwelle der Auslastung des Stromnetzes vorgefunden wird. Auf diese Weise werden die Akkus ohne Zusatzaufwand geladen, wenn hohe Leisungen der Stromerzeugung auftreten oder bevorstehen.

Insgesamt besteht das System aus einer Stromerzeugungseinheit, insbesondere für die Erzeugung regenerative Energien, einem modularen Speichersystem mit austauschbaren Energiespeichereinheiten und einem Load Balancer, der eine intelligente Steuerung des Aufladens der Energiespeichereinheiten bzw. eine intelligente Steuerung des Speicherns überschüssiger Leistung (d. h. Leistung, die wegen Auslastung nicht in das Stromnetz eingespeichert werden kann) bewerkstelligt.

Sofern ein öffentliches Netz vorhanden ist, kann die Stromerzeugungseinheit über eine Weiche mit der Speichereinheit und/oder dem öffentlichen Stromnetz verbunden werden. Bei einer Anwendung ohne Verbindungsmöglichkeit mit einem öffentlichen Stromnetz entfällt die Weiche. In diesem Fall wird die erzeugte Energie direkt zum Aufladen von Akkus in einem erfindungsgemäßen mobilen Lademodul eingesetzt.

Ein erfindungsgemäßes Verfahren zur Speicherung von in einem Stromerzeugungssystem erzeugter elektrischer Energie, umfasst die Schritte: a. Bereitstellung wenigstens einer Stromerzeugungseinheit, und einer Energieeinspeisung zur Einspeisung elektrischer Energie in wenigstens ein an die Energieeinspeisung angekoppeltes Lademodul; und b. Laden wenigstens einer am Lademodul angekoppelten Energiespeichereinheit während der Zeit einer Überkapazität der Stromerzeugung der wenigstens einen Stromerzeugungseinheit.

Im Schritt a. werden vorzugsweise die Stromerzeugungseinheiten an ein Stromnetz angekoppelt, wobei die Verbindung zum Stromnetz unterbrochen werden kann.

Das Verfahren kann eine Steuerung der Ankopplung der wenigstens eine Stromerzeugungseinheit an das Stromnetz und/oder an die Energieeinspeisung in Abhängigkeit von wenigstens einem Zustandsparameter des Speichersystems und/oder des Stromnetzes umfassen.

Nach dem Aufladen können die geladenen Energiespeichereinheiten zu gewünschten Verbrauchern transportiert werden.

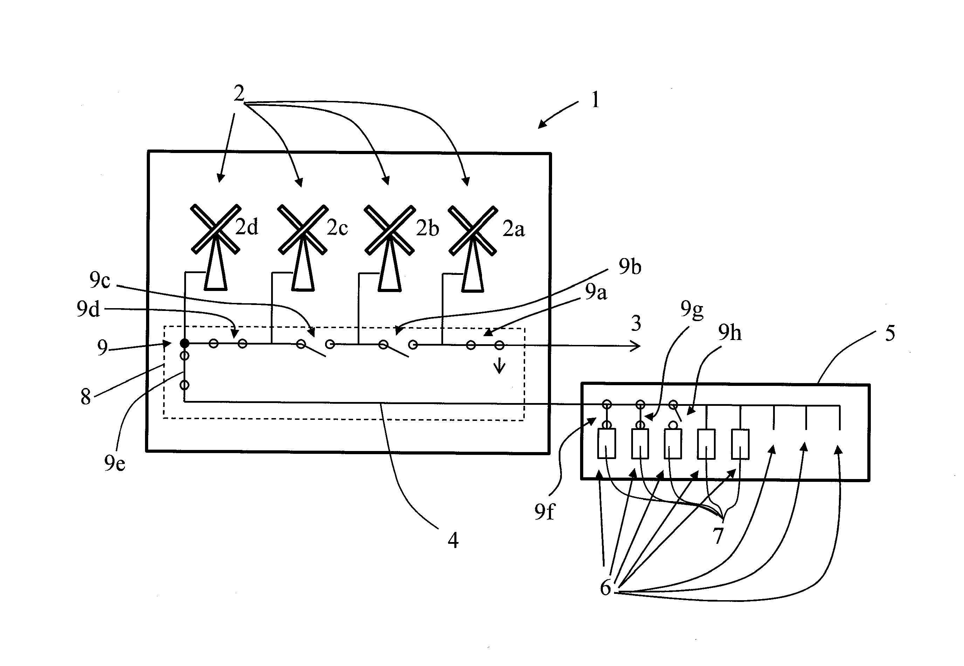

### KURZE BESCHREIBUNG DER FIGUR

Weitere Merkmale und Vorteile der Erfindung werden aus der nachfolgenden Beschreibung bevorzugter Ausführungsbeispiele anhand der beigefügten Figur deutlich. Die Figur zeigt ein Speichersystem gemäß der vorliegenden Erfindung.

### DETALLIERTE BESCHREIBUNG EINES BEVORZUGTEN AUSFÜHRUNGSBEISPIELS

Die Figur zeigt ein Speichersystem 1, das mehrere Stromerzeugungseinheiten (Spannungserzeugungseinheiten, Einheiten zur Erzeugung elektrischer Leistung), z. B. Windräder 2, aufweist. Die mechanische Energie des Windes wird mittels der Windräder 2 und Generatoren in elektrische Energie umgewandelt, die in ein Stromnetz 3 eingespeist wird.

Bei hoher Stromerzeugung durch die Windräder 2 kann es vorkommen, dass einzelne oder mehrere Windräder 2 vom Stromnetz 3 genommen werden müssen, um eine Überlastung des Stromnetzes 3 zu verhindern. Die durch die abgekoppelten Stromerzeugungseinheiten 2 erzeugte Energie geht so verloren.

Gemäß der Erfindung weist das Speichersystem 1 eine alternative Energieeinspeisung 4 auf, die im Fall des Abkoppelns einzelner Stromerzeugungseinheiten 2 vom Netz 3 gespeist wird. Die Energieeinspeisung 4 ist über eine Weiche 9 mit einem oder mehreren, unter Umständen mobilen, Ladeschränken 5 verbunden. Die Zahl der anschließbaren Ladeschränke 5 ist vorzugsweise variabel. Innerhalb der Ladeschränke 5 sind Anschlussplätze 6 für Energiespeichereinheiten 7, beispielsweise Akkumulatoren oder Brennstoffzellen, vorgesehen. Die Energiespeichereinheiten 7 können an den Anschlussplätzen 6 angeschlossen und geladen werden. Sobald sie geladen sind, können sie von dem entsprechenden Anschlussplatz 6 entkoppelt und zum Einsatz, beispielsweise in einem Elektroauto, weiter transportiert werden. Die Energiespeichereinheiten 7 sind somit mobile Module, die sehr flexibel einsetzbar sind.

Um die Aufladung der Energiespeichereinheiten 7, die insbesondere standardisiert sind, gerade bei einer Überlastung des Stromnetzes 3 zu gewährleisten, ist in der Figur schematisch eine Steuerung 8 dargestellt. Die Steuerung 8 sorgt dafür, dass die der vom Netz genommenen Windräder 2 erzeugte Energie in die Energieeinspeisung 4 gelangt. Die Steuerung 8 kann einen sog. "Load Balancer" umfassen. Der "Load Balancer" ist so ausgebildet, dass er, auf Basis eines detektierten Ist-Zustands des Systems, den gesamten Ladevorgang steuern kann. So kann der "Load Balancer" steuern bzw. ermitteln, ob überhaupt eine Überlast vorliegt, sodass Energiespeichereinheiten 7 geladen werden. Außerdem gibt der "Load Balancer" vor, welche der angeschlossenen Ladeschränke 5 und welche der angeschlossenen Energiespeichereinheiten 7 geladen werden. Zudem kann vorgegeben werden, welcher Betrag der erzeugten Leistung bzw. welcher Anteil der erzeugten Leistung zum Beladen jeder der Energiespeichereinheiten 7 verwendet wird. Dabei kann beispielsweise der momentane Beladungszustand der entsprechenden Energiespeichereinheit 7 herangezogen werden (z. B. Laden leerer Akkus statt bereits geladener Akkus; Laden einer dem Leistungsüberschuss angemessener Anzahl von Akkus statt Laden aller angeschlossenen Akkus).

Um die Wirkungsweise der Steuerung schematisch zu verdeutlichen, sind Schalter 9a, 9b, 9c, 9d, 9e, 9f, 9g und 9h skizziert, die in einer vom Zustand (d. h. von Parametern) des Speichersystems 1 bzw. des Speichersystems abhängigen Art und Weise geschaltet sind. So ist im angegeben Zustand schematisch ein erstes Windrad 2a an das Netz 3 gekoppelt, indem ein erster Schalter 9a geschlossen ist. Ein zweites Windrad 2b ist bei geöffnetem zweitem und drittem Schalter 9b bzw. 9c sowohl vom Netz 3 als auch von der Energieeinspeisung 4 getrennt. Dies kann notwendig sein, wenn so viel Leistung erzeugt wird, dass sowohl das Netz 3 als auch die Energieeinspeisung 4 überlastet wären, wenn das zweite Windrad 2b angeschlossen wäre.

Ein drittes und ein viertes Windrad 2c bzw. 2d sind durch Schließen einer vierten und fünften Schalters 9d bzw. 9e an die Energieeinspeisung 4 angeschlossen. Somit wird die vom dritten und vierten Windrad 2c bzw. 2d erzeugte Leistung, die im Normalfall verloren wäre, mittels des Lademoduls 5 in die Energiespeichereinheiten 7 eingespeist. Auf diese Art können Überkapazitäten des Speichersystems 1 genutzt werden.

Die Steuerung 8 weist wenigstens einen Prozessor bzw. einen "Load Balancer" auf, der, in Abhängigkeit verschiedener Zustände bzw. Variablen des Systems, die Ankopplung und Entkopplung der einzelnen Stromerzeugungseinheiten 2 steuert bzw. regelt. Als Parameter können die Auslastung des Netzes 3, die erzeugte Leistung der einzelnen oder aller Stromerzeugungseinheiten 2, die Besetzung der Anschlussplätze 6 der Lademodule 5, der Ladezustand der Energiespeichereinheiten 7, etc. herangezogen werden. So kann über die schematisch und beispielhaft dargestellten Schalter 9f, 9g und 9h bestimmt werden, welche der angeschlossenen Akkus 7 geladen werden. Die Akkus 7 können somit selektiv geladen werden. Die Steuerung 8 sorgt dafür, dass eine optimale Nutzung und Verteilung der von den Stromerzeugungseinheiten 2 erzeugten Leistung erreicht wird.

In einer alternativen Ausführungsform der Erfindung kann die Netzeinspeisung 3 fehlen. Beispielsweise kann eine Solar- oder Windanlage fern von einem öffentlichen Stromnetz bzw. ohne Anschluss an ein öffentliches Stromnetz aufgebaut werden. Das System 1 bietet in diesem Fall die Möglichkeit, Energiespeichereinheiten 7 flexibel und bedarfsweise (d. h. in geeigneter Anzahl) anzuschließen, und mittels der Steuerung individuell angepasst zu laden. Beispielsweise kann das System 1 auch in Privathaushalten eingesetzt werden. Austauschbare Akkus 7, beispielsweise für Elektroautos, können geladen werden, während ein beladener Akku im Elektroauto im Einsatz ist. Nachdem der Akku leer ist, kann er gegen den beladenen, vollen Akku 7 ausgetauscht werden. Gerade bei diesem Anwendungsbeispiel kann es wünschenswert sein, nicht nur zwei, sondern mehrere Akkus 7 parallel und selektiv zu beladen bzw. im Elektroauto einzusetzen.

## Patentansprüche

1. Speichersystem (1) zur Energiespeicherung, umfassend:
wenigstens eine Stromerzeugungseinheit (2); und
eine Energieeinspeisung (4) zur Einspeisung elektrischer Energie in wenigstens ein an die Energieeinspeisung (4) angekoppeltes Lademodul (5).

2. Speichersystem (1) nach Anspruch 1, **dadurch gekennzeichnet, dass** das Speichersystem (1) einen Versorgungsanschluss zur Versorgung eines Stromnetzes (3) aufweist.

3. Speichersystem (1) nach Anspruch 1 oder 2, **dadurch gekennzeichnet, dass** das wenigstens eine Lademodul (5) als ein mobiles, an die Energieeinspeisung (4) an- und abkoppelbares Modul ausgebildet ist.

4. Speichersystem (1) nach einem der vorhergehenden Ansprüche, **dadurch gekennzeichnet, dass**
die Energieeinspeisung (4) mehrere Anschlüsse zum An- und Abkoppeln von Lademodulen (5) aufweist.

5. Speichersystem (1) nach einem der vorhergehenden Ansprüche, **dadurch gekennzeichnet, dass**
die Energieeinspeisung (4) über wenigstens eine Weiche (9) an die Stromerzeugungseinheit (2) anschließbar ist.

6. Speichersystem (1) nach einem der vorhergehenden Ansprüche, **dadurch gekennzeichnet, dass**
das Lademodul (5) zur Aufnahme einer oder mehrerer mobiler Energiespeichereinheiten (7) ausgebildet ist.

7. Speichersystem (1) nach einem der vorhergehenden Ansprüche, **dadurch gekennzeichnet, dass**
das Lademodul (5) einen oder mehrere Anschlussplätze (6) zum Aufladen eines oder mehrerer mobiler Energiespeichereinheiten (7) aufweist.

8. Speichersystem (1) nach einem der vorhergehenden Ansprüche, **dadurch gekennzeichnet, dass**
das Speichersystem (1) eine Steuerung (8) aufweist, die derart ausgebildet ist, dass abhängig von wenigstens einem Parameter des Stromnetzes (3) und/oder des Speichersystems (1) wenigstens eine Stromerzeugungseinheit (2) vom Stromnetz (3) abgekoppelt und an die Energieeinspeisung (4) angekoppelt wird.

9. Speichersystem (1) nach einem der vorhergehenden Ansprüche, **dadurch gekennzeichnet, dass**
die Steuerung (8) wenigstens einen Load Balancer zur Verteilung der durch die Stromerzeugungseinheit (2) erzeugten Leistung auf die einzelnen Energiespeichereinheiten (7) und/oder das Stromnetz (3) umfasst.

10. Verfahren zur Speicherung von in einem Stromerzeugungseinheit (2) erzeugtem Strom, umfassend die Schritte:
a. Bereitstellung wenigstens eine Stromerzeugungseinheit (2), und einer Energieeinspeisung (4) zur Einspeisung elektrischer Energie in wenigstens ein an die Energieeinspeisung (4) angekoppeltes Lademodul (5); und
b. Laden wenigstens einer am Lademodul (5) angekoppelten Energiespeichereinheit (7) während der Zeit einer Überkapazität der wenigstens einen Stromerzeugungseinheit (2).

11. Verfahren nach Anspruch 10, **dadurch gekennzeichnet, dass**
im Schritt a. die Stromerzeugungseinheiten (2) an ein Stromnetz (3) angekoppelt werden, wobei die Verbindung zum Stromnetz unterbrochen werden kann.

12. Verfahren nach Anspruch 11, **dadurch gekennzeichnet, dass**
das Verfahren eine Steuerung der Ankopplung der wenigstens einen Stromerzeugungseinheit (2) an das Stromnetz (3) und/oder an die Energieeinspeisung (4) in Abhängigkeit von wenigstens einem Zustandsparameter des Speichersystem (1) und/oder des Stromnetzes (3) umfasst.
